# EUROPEAN PATENT APPLICATION

(11) **EP 4 752 245 A1**
(43) Date of publication of application: **03.06.2026**
(21) Application number: 24845525.5
(22) Date of filing: 18.07.2024
(51) Int. Cl.: C22B 26/12

(54) **METHOD FOR RECOVERING LITHIUM**

(30) Priority: 24.07.2023 WO PCT/JP2023/027031
(71) Applicant: Nissan Motor Co., Ltd., Yokohama-shi, Kanagawa 221-0023 (JP)
(72) Inventor: KAWASHITA, Yoshio, Atsugi-shi, Kanagawa 243-0123 (JP); ARIHARA, Kazuki, Atsugi-shi, Kanagawa 243-0123 (JP); KUBOTA, Hiroshi, Atsugi-shi, Kanagawa 243-0123 (JP)
(74) Representative: Grünecker Patent- und Rechtsanwälte PartG mbB
(86) International application number: PCT/JP2024/025812
(87) International publication number: WO 2025/023148

(57) **Abstract**

The present invention provides a means for reduction of waste liquid treatment cost in a technique for lithium recovery from a lithium ion-containing aqueous solution. According to the present invention, a lithium recovery method is provided that is a method of recovering lithium from a lithium ion-containing aqueous solution and includes obtaining a mixture containing a gas hydrate, from a gas and the lithium ion-containing aqueous solution, separating the gas hydrate from the mixture to obtain a concentrated aqueous lithium ion solution (1), and recovering lithium from the concentrated aqueous lithium ion solution (1).

## Description

### TECHNICAL FIELD

The present invention relates to a lithium recovery method. In more detail, the present invention relates to a lithium recovery method in which lithium is recovered from a lithium ion-containing aqueous solution.

### BACKGROUND ART

In addition to being used for battery applications as in lithium ion secondary batteries and the like and ceramic applications as in additives for ceramics and glass, lithium (Li) is widely used as a moisture absorbent for air conditioning equipment, a flux in continuous casting, and a raw material for grease. In recent years, the amount of lithium consumed tends to increase with an increase in demand for automotive batteries and the like, and accordingly, a technique for lithium resource recovery is required.

Chinese Patent Application Publication No. 110527849 discloses a hydrate method lithium continuous concentration system for the purpose of recovering lithium resources from sea water, salt lake water, and the like. The above literature describes that the system includes a lithium solution circulation system and a cyclopentane circulation system, and that a lithium solution and cyclopentane are mixed and cooled in a hydrate reaction tank to obtain a hydrate and concentrated lithium-containing solution. Furthermore, the above literature also describes that a lithium-containing solution having a concentration meeting the requirement can be obtained by maintaining the produced hydrate solid in the reaction tank and returning the concentrated lithium-containing solution to the lithium solution circulation system to increase the lithium concentration in the lithium solution.

### SUMMARY OF INVENTION

According to the technique described in the above literature, the lithium concentration in the lithium solution can be increased by separating water as a hydrate (hydrate of cyclopentane, also referred to as cyclopentane hydrate) from the lithium solution. When heated, the hydrate is separated into two phases of a cyclopentane phase and an aqueous phase. The cyclopentane phase can be recycled to the cyclopentane circulation system, but the aqueous phase is unnecessary and therefore discarded as a waste liquid. Furthermore, the solution after lithium is recovered from the concentrated lithium-containing solution is also unnecessary and therefore discarded as a waste liquid. However, cyclopentane remains in these waste liquids and cyclopentane is environmentally hazardous, so that the remaining cyclopentane needs to be removed from the waste liquid and then discarded. Such a waste liquid treatment requires cost (expense, time and/or labor), and as a result, leads to an increase in lithium recovery cost.

Therefore, an object of the present invention is to provide a means for reduction of waste liquid treatment cost in a technique for lithium recovery from a lithium ion-containing aqueous solution.

The present inventors have intensively studied in order to solve the above problems. As a result, it has been found that the above problems can be solved by separating water contained in a lithium ion-containing aqueous solution, as a gas hydrate, in concentration of the lithium ion-containing aqueous solution, and the present invention has been completed.

That is, an embodiment of the present invention is a lithium recovery method of recovering lithium from a lithium ion-containing aqueous solution, and is the lithium recovery method including obtaining a mixture containing a gas hydrate, from a gas and the lithium ion-containing aqueous solution, separating the gas hydrate from the mixture to obtain a concentrated aqueous lithium ion solution (1), and recovering lithium from the concentrated aqueous lithium ion solution (1).

### DESCRIPTION OF EMBODIMENTS

Hereinafter, embodiments of the present invention will be described, but the technical scope of the present invention should be determined on the basis of the description of the claims, and is not limited only to the following embodiments.

An embodiment of the present invention is a lithium recovery method of recovering lithium from a lithium ion-containing aqueous solution, and is the lithium recovery method including obtaining a mixture containing a gas hydrate, from a gas and the lithium ion-containing aqueous solution (hereinafter, also referred to as "gas hydrate production step (A)" or "step (A)"), separating the gas hydrate from the mixture to obtain a concentrated aqueous lithium ion solution (1) (hereinafter, also referred to as "gas hydrate separation step (B)" or "step (B)"), and recovering lithium from the concentrated aqueous lithium ion solution (1) (hereinafter, also referred to as "lithium ion recovery step (C)" or "step (C)"). According to the present embodiment, waste liquid treatment cost can be reduced in a technique for lithium recovery from a lithium ion-containing aqueous solution.

Hereinafter, each step of the lithium recovery method according to the present embodiment will be described in detail.

The present embodiment relates to a lithium recovery method in which lithium is recovered from a lithium ion-containing aqueous solution. The lithium ion-containing aqueous solution to be subjected to the recovery can be used without limitation as long as the lithium ion-containing aqueous solution is a solution in which lithium ions are dissolved in water, such as salt water (for example, sea water, salt lake water, geothermal salt water, hot spring water, or the like), a lithium ion-containing aqueous solution obtained in a process of recycling a lithium-containing product (for example, a lithium ion battery (LiB)), concentrated sea water that is a by-product of sea water desalination, concentrated sea water that is a by-product at the time of manufacturing a sodium salt, or the like. Methods of obtaining a lithium ion-containing aqueous solution from an LiB include the following example. First, an LiB is inactivated by a heat treatment or the like and then crushed, and substances derived from the housing, the resin, and the current collector metal are removed. The remaining black mass (concentrated dregs containing nickel, manganese, cobalt, lithium, and the like) derived from the positive electrode active material, the negative electrode active material, and the electrolyte is brought into contact with water to dissolve lithium in water, and thus a lithium ion-containing aqueous solution is obtained. Nickel, manganese, cobalt, and the like excluding lithium are insoluble in water, and therefore separately recovered by hydrometallurgy in which a black mass after lithium is dissolved in water is dissolved in an acid solution to extract metal ions.

The concentration of lithium ions contained in the lithium ion-containing aqueous solution is not particularly limited, and is preferably 10⁻⁵ mol/kg or more and 10⁻¹ mol/kg or less, more preferably 10⁻⁵ mol/kg or more and 10⁻² mol/kg or less, and still more preferably 10⁻⁵ mol/kg or more and 10⁻³ mol/kg or less.

Conventionally, it has not been easy to separate an alkali metal ion (monovalent cation) and an alkaline earth metal ion (divalent cation) and recover only the alkali metal ion. However, according to the lithium recovery method according to the present embodiment (particularly, the lithium recovery method in which a CO₂ hydrate is produced using a gas containing CO₂ in the step (A)), lithium can be easily recovered also from a lithium ion-containing aqueous solution containing an alkaline earth metal ion. Therefore, in a lithium recovery method according to a preferable embodiment of the present invention, the lithium ion-containing aqueous solution contains at least one selected from alkaline earth metal ions (a magnesium ion, a calcium ion, a strontium ion, a barium ion, a beryllium ion, and a radium ion). More preferably, the lithium ion-containing aqueous solution contains at least one selected from a magnesium ion, a calcium ion, a strontium ion, or a barium ion. Still more preferably, the lithium ion-containing aqueous solution contains a magnesium ion and/or a calcium ion.

### <Gas Hydrate Production Step (A)>

In the step (A), a mixture containing a gas hydrate is obtained from a gas and the lithium ion-containing aqueous solution. A gas hydrate is an ice-like solid substance in which a gas is present inside a cage-like structure of a water molecule. In general, water forming a cage-like structure is referred to as a "host", and a gas to be present inside the cage-like structure is referred to as a "guest". A gas hydrate can be produced by setting a low-temperature and high-pressure condition in the presence of water and a gas. In the present description, the term "gas" refers to a substance that is gaseous at normal temperature and normal pressure (25°C, 1 atm (101325 Pa)). According to the method according to the present embodiment, when a gas is used as a guest, separation of the guest and water is easier than in a case where cyclopentane, which is liquid at normal temperature and normal pressure, is used as a guest, and thus the cost of a waste liquid treatment can be reduced.

The kind of the gas used in the step (A) is not particularly limited, and examples of the gas include hydrocarbons, carbon dioxide (CO₂), oxygen (O₂), nitrogen (N₂), argon (Ar), krypton (Kr), xenon (Xe), hydrogen sulfide (H₂S), and the like. Specific examples of the hydrocarbons include methane, ethane, propane, n-butane, iso-butane, ethylene, 1-butene, 2-butene, isobutene, and the like. These gases may be used singly, or in combination of two or more kinds thereof. Among them, a gas containing CO₂ is preferable, and CO₂ is preferable. In a case where CO₂ is used as described above, the gas hydrate to be produced is a CO₂ hydrate. By using CO₂, the cost required for lithium recovery can be reduced. Furthermore, in a case where the lithium ion-containing aqueous solution contains an alkaline earth metal ion, there is also an advantage that the alkaline earth metal ion can be easily separated as a carbonate by using CO₂.

In order to enable production of a gas hydrate under a higher-temperature and lower-pressure condition (mild condition), it is also preferable to produce a hydrate in the presence of a help guest substance in addition to water (host) and the gas (guest). From the viewpoint of further reducing the cost of a waste liquid treatment, the help guest substance is preferably gaseous at normal temperature and normal pressure. Incidentally, substances that are liquid at normal temperature and normal pressure (for example, cyclopentane, tetrahydrofuran, methylcyclohexane, and the like) are known as help guest substances, but from the viewpoint of further reducing the cost of a waste liquid treatment, it is preferable not to add a substance that is liquid at normal temperature and normal pressure into the system in the step (A).

A specific method of producing a gas hydrate from the gas and water in the lithium ion-containing aqueous solution is not particularly limited, and a known method of producing a gas hydrate can be appropriately adopted. Examples of the specific method in the case of producing a CO₂ hydrate using CO₂ include the following method. First, the lithium ion-containing aqueous solution and CO₂ are mixed to prepare a mixed liquid. Next, the mixed liquid is subjected to a low-temperature and high-pressure condition to produce a CO₂ hydrate. At this time, the mixed liquid may be subjected to a low-temperature and high-pressure condition while CO₂ is continuously supplied into the mixed liquid. Here, the low-temperature and high-pressure condition is not particularly limited as long as it is a condition in which the temperature is lower and the pressure is higher than in the phase equilibrium condition in a phase equilibrium diagram of a CO₂ hydrate system drawn on a p-T diagram. Note that the quadruple point at which four phases of water, liquid CO₂, gas CO₂, and a CO₂ hydrate can coexist has a temperature of 10.5°C and a pressure of 4.46 MPa (44.0 atm).

In the step (A), in a case where the gas contains CO₂ and the gas hydrate is a CO₂ hydrate, the pH of the mixture containing the gas hydrate is preferably 9 or less, and more preferably less than 7. If the pH of the mixture is high, a lithium salt such as lithium carbonate (Li₂CO₃) or lithium hydrogen carbonate (LiHCO₃) tends to precipitate along with concentration of the lithium-containing aqueous solution. Precipitation of a lithium salt may lead to deterioration of lithium recovery efficiency, and therefore it is preferable to control the pH of the mixture so as not to be too high (preferably so as not to be more than 9, and more preferably so as not to be 7 or more). By setting the pH of the mixture to 9 or less, precipitation of lithium carbonate (Li₂CO₃) can be suppressed, and the recovery efficiency of lithium can be improved. By setting the pH of the mixture to less than 7, precipitation of lithium hydrogen carbonate (LiHCO₃) in addition to lithium carbonate (Li₂CO₃) can be suppressed, and thus the recovery efficiency of lithium can be further improved. The lower limit of the pH of the mixture is not particularly limited, and is preferably 1 or more, more preferably 2 or more, and still more preferably 3 or more. The pH of the mixture can be controlled by adjusting the amount of CO₂ supplied for producing a gas hydrate.

In the step (A), a carbonate of an alkaline earth metal (for example, MgCO₃, CaCO₃, SrCO₃, BaCO₃, BeCO₃, RaCO₃) can be precipitated during production of the CO₂ hydrate in a case where the gas contains CO₂, the gas hydrate is a CO₂ hydrate, and the lithium ion-containing aqueous solution contains at least one selected from alkaline earth metal ions. Thus, the mixture may contain an alkaline earth metal carbonate. In this case, in the gas hydrate separation step (B) described below, it is preferable to perform removal of the carbonate from the mixture, in addition to separation of the gas hydrate from the mixture.

In the step (A), a gas hydrate is produced from water in the lithium ion-containing aqueous solution and the gas. Furthermore, lithium ions in the lithium ion-containing aqueous solution are concentrated by production of the gas hydrate. Therefore, according to the step (A), a mixture containing a gas hydrate (more specifically, a mixture of a gas hydrate and a concentrated aqueous lithium ion solution) is obtained.

### <Gas Hydrate Separation Step (B)>

In the step (B), the gas hydrate is separated from the mixture to obtain a concentrated aqueous lithium ion solution (1). The separation operation may be performed under a low-temperature and high-pressure condition, but can also be performed under normal temperature and normal pressure. A specific method of the separation is not particularly limited, and a known method of solid-liquid separation can be appropriately adopted. If the density of the gas hydrate is lower than the density of the concentrated aqueous lithium ion solution (1), the sherbet-like gas hydrate is in a state of floating in the mixture. In this case, these can be easily separated by taking out the gas hydrate from the upper part of the mixture or drawing out the concentrated aqueous lithium ion solution (1) from the lower part of the mixture. In addition, by using centrifugal separation or a squeezing method, the hydrate can be more quickly separated.

The concentration of lithium ions contained in the concentrated aqueous lithium ion solution (1) is not particularly limited, and is preferably 10⁻⁴ mol/kg or more, more preferably 10⁻⁴ mol/kg or more and 10 mol/kg or less, still more preferably 10⁻³ mol/kg or more and 10 mol/kg or less, particularly preferably 10⁻² mol/kg or more and 10 mol/kg or less, and most preferably 10⁻¹ mol/kg or more and 10 mol/kg or less.

### <Lithium Ion Recovery Step (C)>

In the step (C), lithium is recovered from the concentrated aqueous lithium ion solution (1). The form of lithium recovered in the step (C) may be any of a lithium ion, a lithium compound, or metal lithium, and is not particularly limited. In the lithium ion recovery step using a lithium ion conductor described below, lithium is recovered as a lithium ion recovery aqueous solution. Here, in the present description, the term "lithium ion recovery aqueous solution" refers to an aqueous solution substantially containing only lithium ions as metal ions. The amount of metal ions other than lithium ions in the lithium ion recovery aqueous solution is preferably 3 mol% or less, more preferably 1 mol% or less, and still more preferably 0.1 mol% or less (lower limit: 0 mol%) with respect to the total number of moles of metal ions. Recovery may be performed after conversion from the lithium ion recovery aqueous solution into various lithium compounds (for example, lithium carbonate and lithium hydroxide). That is, according to an embodiment of the present invention, a lithium ion recovery aqueous solution manufacturing method including the lithium recovery method according to the present embodiment is provided. Furthermore, according to another embodiment of the present invention, a lithium compound (for example, lithium carbonate or lithium hydroxide) manufacturing method including the lithium recovery method according to the present embodiment is provided.

### [Lithium Ion Recovery Step (C1) Using Lithium Ion Conductor]

In recovering lithium from the concentrated aqueous lithium ion solution (1) (the step (C)), a lithium recovery method according to a preferable embodiment of the present invention includes disposing the concentrated aqueous lithium ion solution (1) on one main surface side of a lithium ion conductor, disposing water for recovery on an opposite main surface side, and allowing a lithium ion contained in the concentrated aqueous lithium ion solution (1) to permeate from the one main surface side to the opposite main surface side to obtain a lithium ion recovery aqueous solution. Hereinafter, the lithium ion recovery step including the above configuration is also simply referred to as "step (C1)". According to the step (C1) as described above, a lithium ion recovery aqueous solution having high purity can be obtained.

The lithium ion conductor is not particularly limited as long as it has a function of selectively transmitting lithium ions. As such a lithium ion conductor, for example, a lithium lanthanum titanate (LLTO) having a composition of the formula 1: (Liₓ, La_{y})TiO_{z} (wherein x = 3a - 2b, y = 2/3 - a, z = 3 - b, 0 < a ≤ 1/6, 0 ≤ b ≤ 0.06, x > 0) and a Li-substituted NASICON (Na Super Ionic Conductor) type crystal having a composition of the formula 2: Li_{1+x+y}Alₓ(Ti, Ge)₂₋ₓSi_{y}P_{3-y}O₁₂ (wherein 0 ≤ x ≤ 0.6, 0 ≤ y ≤ 0.6) described in Japanese Patent No. 6818334 (corresponding to U.S. Patent Application Publication No. 2019/0032230) are known. From the viewpoint of durability and robustness, LLTO having a composition of Li_{0.29}La_{0.57}TiO₃ (in the formula 1, a ≈ 0.1, b ≈ 0) is preferable. From the viewpoint of the extraction rate of lithium ions, a Li-substituted NASICON-type lithium ion conductor is preferable.

In the step (C1), the concentrated aqueous lithium ion solution (1) is disposed on one main surface side of the lithium ion conductor, and the water for recovery is disposed on an opposite main surface side. More specifically, for example, in a dialysis tank including two chambers separated by the lithium ion conductor, the concentrated aqueous lithium ion solution (1) is put into one chamber (hereinafter, also referred to as "first chamber"), and the water for recovery is disposed in the other chamber (hereinafter, also referred to as "second chamber"). Here, from the viewpoint of recovering high-purity lithium, the water for recovery is preferably water containing no or almost no impurity (pure water (specific resistance is about 1 to 10 MΩ·cm), ultrapure water (specific resistance is more than about 10 MΩ·cm)). The pure water and the ultrapure water may be RO water, deionized water, or distilled water.

The lithium ions contained in the concentrated aqueous lithium ion solution (1) are allowed to permeate from the one main surface side to the opposite main surface side using a dialysis tank as described above. From the viewpoint of improving the recovery rate of lithium, permeation is preferably performed in an electrodialysis mode. That is, according to a preferable embodiment, in the step (C1), a positive electrode (anode) is disposed in the one main surface side (first chamber), a negative electrode (cathode) is disposed in the opposite main surface side (second chamber), and a voltage is applied between the electrodes. At this time, the positive electrode is preferably disposed so as to be in contact with the one main surface, and the negative electrode is preferably disposed so as to be in contact with the opposite main surface. Thus, the movement rate of lithium ions from the one main surface side (first chamber) to the opposite main surface side (second chamber) can be significantly improved. Note that in general, by electrodialysis, oxygen (O₂) and hydrogen (H₂) can be generated as by-products through electrolysis of water (positive electrode reaction: 2H₂O → O₂ + 4H⁺ + 4e⁻ or 4OH- →O₂+ 2H₂O +4e⁻; negative electrode reaction: 2H⁺+ 2e⁻ → H₂). Furthermore, in a case where chlorine ions are contained in the aqueous solution, chlorine may be generated instead of oxygen.

Furthermore, it is also possible to perform dialysis without applying a voltage by using concentration difference energy of lithium ions between the one main surface side (first chamber) and the opposite main surface side (second chamber) (reverse electrodialysis mode). In this case, the movement rate of lithium ions is lower than in electrodialysis, but a potential difference is generated between the one main surface side (first chamber) and the opposite main surface side (second chamber), so that electric energy can be taken out.

According to the lithium recovery method according to the present embodiment, by performing the step (C1) using the concentrated aqueous lithium ion solution (1) obtained in the steps (A) and (B), the movement of lithium ions in the lithium ion conductor in the step (C1) is accelerated, and the recovery efficiency of lithium can be improved. Conventionally, in a lithium recovery method using a lithium ion conductor (LLTO or Li-substituted NASICON-type crystal described above), a way of increasing the voltage applied in an electrodialysis mode has been studied for the purpose of improving the movement rate of lithium ions. However, in a conventional way, there has been a case where the movement rate of lithium ions cannot be sufficiently improved even if the voltage is increased. This has been considered to be because along with an increase in voltage, electron conduction arises in the lithium ion conductor to decrease the current efficiency or the power consumption for electrolysis of water is increased. Meanwhile, according to the recovery method of the present embodiment, by using the concentrated aqueous lithium ion solution (1) in the step (C1), the movement rate of lithium ions can be significantly improved without increasing the applied voltage. As a method of concentrating the lithium ion-containing aqueous solution, a sun-drying method or the like is also conceivable. However, even concentration requiring one to two years by a sun-drying method can be performed in a few days by production and separation of a gas hydrate. Thus, a larger amount of lithium can be recovered in a shorter period of time.

In the step (C1) (particularly in a case where permeation is performed in an electrodialysis mode), when the pH of the concentrated aqueous lithium ion solution (1) obtained in the step (B) is less than 7, it is preferable to adjust the pH of the concentrated aqueous lithium ion solution (1) to 7 or more and then dispose the concentrated aqueous lithium ion solution (1) on the one main surface side (first chamber). That is, in a lithium recovery method according to a preferable embodiment of the present invention, recovering lithium from the concentrated aqueous lithium ion solution (1) includes adjusting the pH of the concentrated aqueous lithium ion **solution** (1) when the pH is less than 7 to obtain a concentrated aqueous lithium ion solution (2) having a pH of 7 or more, and disposing the concentrated aqueous lithium ion solution (2) on one main surface side of a lithium ion conductor, disposing water for recovery on an opposite main surface side, and allowing a lithium ion contained in the concentrated aqueous lithium ion solution (2) to permeate from the one main surface side to the opposite main surface side to obtain a lithium ion recovery aqueous solution. According to such a configuration, the recovery efficiency of lithium can be further improved. In a system in which hydrogen ions and lithium ions coexist, the selective permeability of lithium ions in the lithium ion conductor may deteriorate. In particular, in a case where permeation is performed in an electrodialysis mode, hydrogen ions are generated along with electrolysis of water at the positive electrode (anode) in the main surface side (first chamber) (positive electrode reaction: 2H₂O → O₂ + 4H⁺ + 4e⁻). Therefore, a problem tends to appear that the selective permeability of lithium ions in the lithium ion conductor deteriorates. By setting the pH to 7 or more, a reaction tends to proceed in which oxygen and water are produced from hydroxide ions (4OH⁻ → O₂ + 2H₂O + 4e⁻) at the positive electrode, and the positive electrode reaction is less likely to proceed, so that generation of hydrogen ions is suppressed. Thus, the selective permeability of lithium ions in the lithium ion conductor is improved, and as a result, the lithium ion recovery efficiency can be improved. In order to further improve the lithium ion recovery efficiency, when the pH of the concentrated aqueous lithium ion solution (1) is less than 9, it is more preferable to adjust the pH of the concentrated aqueous lithium ion solution (1) so that the pH becomes 9 or more, and when the pH of the concentrated aqueous lithium ion solution (1) is less than 12, it is still more preferable to adjust the pH of the concentrated aqueous lithium ion solution (1) so that the pH becomes 12 or more.

It is preferable to adopt a method, as a specific method of adjusting (increasing) the pH, in which sodium hydroxide or potassium hydroxide is added to the concentrated aqueous lithium ion solution (1). The lithium ion conductor can be selectively permeable to lithium ions even in a case where sodium ions or potassium ions and lithium ions coexist. Furthermore, there is also an advantage that an adverse effect due to salt precipitation is less likely to occur because a carbonate and a hydrogen carbonate of sodium or potassium have higher solubility than a carbonate and a hydrogen carbonate of lithium. From the viewpoint of suppressing precipitation of lithium carbonate or lithium hydrogen carbonate, it is also preferable to adjust (increase) the pH by removing CO₂ dissolved in the concentrated aqueous lithium ion solution (1). Specific examples of a method of removing CO₂ include methods of reducing the pressure of the concentrated aqueous lithium ion solution (1), heating, bubbling with a gas (air, oxygen, nitrogen, argon, or the like) other than CO₂, and evaporating water in the concentrated aqueous lithium ion solution (1), and the like.

From the viewpoint of suppressing precipitation of lithium carbonate or lithium hydrogen carbonate, it is also preferable to remove CO₂ from the concentrated aqueous lithium ion solution (1) in the step (C1) regardless of the pH of the concentrated aqueous lithium ion solution (1). That is, in a lithium recovery method according to a preferable embodiment of the present invention, recovering lithium from the concentrated aqueous lithium ion solution (1) includes removing CO₂ from the concentrated aqueous lithium ion solution (1) to obtain a concentrated aqueous lithium ion solution (3), and disposing the concentrated aqueous lithium ion solution (3) on one main surface side of a lithium ion conductor, disposing water for recovery on an opposite main surface side, and allowing a lithium ion contained in the concentrated aqueous lithium ion solution (3) to permeate from the one main surface side to the opposite main surface side to obtain a lithium ion recovery aqueous solution. In particular in a case where the gas contains CO₂ and the gas hydrate is a CO₂ hydrate in the step (A), lithium carbonate or lithium hydrogen carbonate tends to precipitate, and therefore it is preferable to suppress precipitation of these lithium salts by setting the step (C1) to have the above configuration. Note that a specific method of removing CO₂ is as described above.

Note that the following embodiments are also included in the scope of the present invention:
Item 1: a lithium recovery method of recovering lithium from a lithium ion-containing aqueous solution, the lithium recovery method including obtaining a mixture containing a gas hydrate, from a gas and the lithium ion-containing aqueous solution, separating the gas hydrate from the mixture to obtain the concentrated aqueous lithium ion solution (1), and recovering lithium from the concentrated aqueous lithium ion solution (1);
Item 2: the method according to Item 1, wherein the gas contains CO₂, and the gas hydrate is a CO₂ hydrate;
Item 3: the method according to Item 1 or 2, wherein a pH of the mixture is 9 or less;
Item 4: the method according to Item 3, wherein a pH of the mixture is less than 7;
Item 5: the method according to any one of Items 1 to 4, wherein the lithium ion-containing aqueous solution contains at least one selected from a magnesium ion, a calcium ion, a strontium ion, a barium ion, a beryllium ion, or a radium ion;
Item 6: the method according to any one of Items 1 to 5, wherein recovering lithium from the concentrated aqueous lithium ion solution (1) includes disposing the concentrated aqueous lithium ion solution (1) on one main surface side of a lithium ion conductor, disposing water for recovery on an opposite main surface side, and allowing a lithium ion contained in the concentrated aqueous lithium ion solution (1) to permeate from the one main surface side to the opposite main surface side to obtain a lithium ion recovery aqueous solution;
Item 7: the method according to any one of Items 1 to 5, wherein recovering lithium from the concentrated aqueous lithium ion solution (1) includes disposing the concentrated aqueous lithium ion solution (1) and a positive electrode on one main surface side of a lithium ion conductor, disposing water for recovery and a negative electrode on an opposite main surface side, and applying a voltage between the positive electrode and the negative electrode to allow a lithium ion contained in the concentrated aqueous lithium ion solution (1) to permeate from the one main surface side to the opposite main surface side to obtain a lithium ion recovery aqueous solution;
Item 8: the method according to any one of Items 1 to 5, wherein recovering lithium from the concentrated aqueous lithium ion solution (1) includes adjusting a pH of the concentrated aqueous lithium ion solution (1) when the pH is less than 7 to obtain a concentrated aqueous lithium ion solution (2) having a pH of 7 or more; and disposing the concentrated aqueous lithium ion solution (2) on one main surface side of a lithium ion conductor, disposing water for recovery on an opposite main surface side, and allowing a lithium ion contained in the concentrated aqueous lithium ion solution (2) to permeate from the one main surface side to the opposite main surface side to obtain a lithium ion recovery aqueous solution;
Item 9: the method according to any one of Items 1 to 5, wherein recovering lithium from the concentrated aqueous lithium ion solution (1) includes adjusting a pH of the concentrated aqueous lithium ion solution (1) when the pH is less than 7 to obtain a concentrated aqueous lithium ion solution (2) having a pH of 7 or more; and disposing the concentrated aqueous lithium ion solution (2) and a positive electrode on one main surface side of a lithium ion conductor, disposing water for recovery and a negative electrode on an opposite main surface side, and allowing a lithium ion contained in the concentrated aqueous lithium ion solution (2) to permeate from the one main surface side to the opposite main surface side to obtain a lithium ion recovery aqueous solution;
Item 10: the method according to any one of Items 1 to 5, wherein recovering lithium from the concentrated aqueous lithium ion solution (1) includes removing CO₂ from the concentrated aqueous lithium ion solution (1) to obtain a concentrated aqueous lithium ion solution (3), and disposing the concentrated aqueous lithium ion solution (3) on one main surface side of a lithium ion conductor, disposing water for recovery on an opposite main surface side, and allowing a lithium ion contained in the concentrated aqueous lithium ion solution (3) to permeate from the one main surface side to the opposite main surface side to obtain a lithium ion recovery aqueous solution.

The present application is based on International Patent Application PCT/JP2023/027031 filed on July 24, 2023, the disclosure content of which is incorporated herein by reference in its entirety.

## Claims

1. A lithium recovery method of recovering lithium from a lithium ion-containing aqueous solution, the lithium recovery method comprising:
obtaining a mixture containing a gas hydrate, from a gas and the lithium ion-containing aqueous solution;
separating the gas hydrate from the mixture to obtain a concentrated aqueous lithium ion solution (1); and
recovering lithium from the concentrated aqueous lithium ion solution (1).

2. The lithium recovery method according to claim 1, wherein the gas contains CO₂, and the gas hydrate is a CO₂ hydrate.

3. The lithium recovery method according to claim 1 or 2, wherein a pH of the mixture is 9 or less.

4. The lithium recovery method according to claim 3, wherein the pH of the mixture is less than 7.

5. The lithium recovery method according to claim 1 or 2, wherein the lithium ion-containing aqueous solution contains at least one selected from a magnesium ion, a calcium ion, a strontium ion, a barium ion, a beryllium ion, or a radium ion.

6. The lithium recovery method according to claim 1 or 2, wherein recovering lithium from the concentrated aqueous lithium ion solution (1) comprises
disposing the concentrated aqueous lithium ion solution (1) on one main surface side of a lithium ion conductor, disposing water for recovery on an opposite main surface side, and allowing a lithium ion contained in the concentrated aqueous lithium ion solution (1) to permeate from the one main surface side to the opposite main surface side to obtain a lithium ion recovery aqueous solution.

7. The lithium recovery method according to claim 1 or 2, wherein recovering lithium from the concentrated aqueous lithium ion solution (1) comprises:
adjusting a pH of the concentrated aqueous lithium ion solution (1) when the pH is less than 7 to obtain a concentrated aqueous lithium ion solution (2) having a pH of 7 or more; and
disposing the concentrated aqueous lithium ion solution (2) on one main surface side of a lithium ion conductor, disposing water for recovery on an opposite main surface side, and allowing a lithium ion contained in the concentrated aqueous lithium ion solution (2) to permeate from the one main surface side to the opposite main surface side to obtain a lithium ion recovery aqueous solution.

8. The lithium recovery method according to claim 1 or 2, wherein recovering lithium from the concentrated aqueous lithium ion solution (1) comprises:
removing CO₂ from the concentrated aqueous lithium ion solution (1) to obtain a concentrated aqueous lithium ion solution (3); and
disposing the concentrated aqueous lithium ion solution (3) on one main surface side of a lithium ion conductor, disposing water for recovery on an opposite main surface side, and allowing a lithium ion contained in the concentrated aqueous lithium ion solution (3) to permeate from the one main surface side to the opposite main surface side to obtain a lithium ion recovery aqueous solution.
